# EUROPÄISCHE PATENTSCHRIFT

(11) **EP 0 377 149 B1**
(45) Veröffentlichungstag und Bekanntmachung des Hinweises auf die Patenterteilung: **15.09.1993**
(21) Anmeldenummer: 89123114.4
(22) Anmeldetag: 14.12.1989
(51) Int. Cl.: C09D 157/08, C08K 9/04

(54) **Unterbodenschutzmasse und Verfahren zu deren Herstellung**
Floor protection agent and method for its preparation
Composition de protection de bas de caisse et son procédé de préparation

(30) Priorität: 03.01.1989 DE 3900054
(43) Veröffentlichungstag der Anmeldung: 11.07.1990
(73) Patentinhaber: DEUTSCHE SOLVAY-WERKE GMBH, 42697 Solingen (DE)
(72) Erfinder: Aumann, Gerd, Dr. Dipl.-Chem., D-4234 Alpen-Veen (DE); Giesen, Matthias, Dr. Dipl.-Chem., D-4100 Duisburg 46 (DE); Klatte, Gerd, Dr. Dipl.-Chem., D-4134 Rheinberg (DE); Korte, Hans-Jürgen, Dr. Dipl.-Chem., D-4000 Düsseldorf 1 (DE)
(74) Vertreter: Lauer, Dieter, Dr.

(56) Entgegenhaltungen:
- DE-B- 1 004 800
- DE-B- 2 840 996
- WPIL, FILE SUPPLIER Derwent Publications Ltd., London, GB; & JP-A 62-84175 (NISSAN MOTOR KK, NIPPON GOMU KK) 8.10. 1985

## Beschreibung

Die vorliegende Erfindung betrifft eine Unterbodenschutzmasse für Kraftfahrzeuge, enthaltend mindestens ein feinteiliges Vinylchloridhomo-, -co-, -ter- oder -pfropfpolymerisat, mindestens einen Weichmacher, mindestens einen Stabilisator, mindestens einen Füllstoff auf der Basis von Calciumcarbonat oder ein Calciumcarbonat enthaltendes Füllstoffgemisch und mindestens einen Haftvermittler und/oder einen anderen Hilfs- oder Zusatzstoff sowie ggf. einen Farbstoff, ein Farbpigment, ein Lose- und/oder Verdünnungsmittel, wobei durch die Oberflächenbehandlung eines Teiles oder des gesamten feinteiligen mineralischen Füllstoffes auf der Basis von Calciumcarbonat mit einer bestimmten organisch-chemischen Verbindung verbesserte Eigenschaften der Unterbodenschutzmasse erhalten werden.

Überzugsmittel bzw. Überzugsmassen für Metalle auf der Basis von Polyvinylchlorid, Weichmacher, Pigmenten und/oder Füllstoffen, u.a. Kreide, sind bereits bekannt (vgl. u.a. DE-AS 1 229 220). Es ist weiterhin bekannt, daß die Verarbeitbarkeit bei bestimmten Anwendungsgebieten, z.B. zur Metallbeschichtung, Schwierigkeiten insofern mit sich bringt, da eine gute Verarbeitbarkeit gegeben sein muß, jedoch andererseits auch andere Anforderungen, z. B. Haftfestigkeit und dgl., bestehen.

Noch größere Anforderungen werden an Unterbodenschutzmassen für Kraftfahrzeuge, beispielsweise auf der Basis von Polyvinylchlorid gestellt, da einerseits die Unterbodenschutzmassen leicht auftragbar, gut haftbar und dgl. sein müssen und andererseits gegenüber Steinschlag und auch anderen mechanischen Einflüssen eine gewisse Widerstandsfähigkeit aufweisen müssen. Es hat sich daher ergeben, daß zahlreiche Plastisole, die beispielsweise zur Beschichtung von Papier, zur Herstellung von Tapeten, zur Herstellung von Bodenbelägen, zur Kabelummantelung und dgl. eingesetzt werden können, nicht als Unterbodenschutzmittel oder -massen geeignet sind.

Ziel und Aufgabe der vorliegenden Erfindung war es, eine Unterbodenschutzmasse auf der Basis von Polyvinylchlorid mit verbesserten Eigenschaften zu finden. Insbesondere sollte die Unterbodenschutzmasse verbesserte rheologische Eigenschaften aufweisen, z.B. eine gute Fließfähigkeit während der Aufbringung oder beim Spritzen besitzen. Weiterhin sollte die Unterbodenschutzmasse eine hohe Standfestigkeit nach dem Auftragen und eine gute Haftfähigkeit auf dem Untergrund aufweisen, ohne daß das Unterbodenschutzmittel in seinen anderen Eigenschaften wesentlich beeinträchtigt wird.

Erfindungsgemäß wurde festgestellt, daß diesen Zielen und Aufgaben eine Unterbodenschutzmasse für Kraftfahrzeuge gerecht wird, enthaltend mindestens ein feinteiliges Vinylchloridhomo-, -co-, -ter- oder -pfropfpolymerisat, mindestens einen Weichmacher, mindestens einen Stabilisator, mindestens einen Füllstoff auf der Basis von Calciumcarbonat oder ein Calciumcarbonat enthaltendes Füllstoffgemisch und mindestens einen Haftvermittler und/oder einen anderen Hilfs- oder Zusatzstoff sowie ggf. einen Farbstoff ein Farbpigment, ein Löse- und/oder Verdünnungsmittel. Gemäß der Erfindung ist ein Teil oder der gesamte Füllstoff, vorzugsweise das Calciumcarbonat oder das Füllstoffgemisch, vorzugsweise das im Füllstoffgemisch enthaltene Calciumcarbonat, mit 0,3 bis 12 Gew.-%, vorzugsweise 1 bis 5 Gew.-% (bezogen auf 100 Gewichtsteile des oberflächenbehandelten Calciumcarbonates oder des oberflächenbehandelten Füllstoffgemisches, vorzugsweise des darin enthaltenden Calciumcarbonates) mindestens einer ungesättigten Monocarbonsäure, Fettsäure, oder einem Salz dieser Verbindung, vorzugsweise Ammoniumsalz der ungesättigten Monocarbonsäure oder Fettsäure, mit C₄ bis C₁₄, vorzugsweise C₅ bis C₁₂, versehen, die bzw. das auf der Oberfläche oder auf einem Teil der Oberfläche des Füllstoffes oder Füllstoffgemisches, vorzugsweise des Calciumcarbonates, angeordnet ist. Bevorzugt werden mit den vorgenannten chemischen Verbindungen oberflächenbehandelte Calciumcarbonatteilchen in Unterbodenschutzmassen eingesetzt, die nachfolgend gemahlen sind, insbesondere um gebildete Agglomerate zu trennen. Das Calciumcarbonat weist nach einer bevorzugten Ausführungsform eine mittlere Teilchengröße von 0,01 µm bis 20 µm, vorzugsweise 0,05 µm bis 5 µm, auf. Das Calciumcarbonat ist vorzugsweise ein synthetisches Calciumcarbonat. Das eingesetzte Calciumcarbonat weist eine spezifische Oberfläche (BET, Adsorption mit Stickstoff) von 0,5 bis 100 m²/g, vorzugsweise 1 bis 50 m²/g, auf. Es ist als Füllstoff bevorzugt allein oder im Gemisch mit anderen Füllstoffen in der Unterbodenschutzmasse enthalten.

Als ungesättigte Monocarbonsäure wird eine ein- oder mehrfach ungesättigte, vorzugsweise eine zweifach ungesättigte konjugierte oder nicht konjugierte Carbonsäure, ein Alkalisalz derselben, vorzugsweise ein Ammoniumsalz einer ein- oder zweifach ungesättigten Carbonsäure, oder eine Mischung derselben eingesetzt, insbesondere Crotonsäure, 2-Pentensäure, 4-Pentensäure, 2-Hexensäure, 3-Hexensäure, 2,4-Pentadiensäure, 3-Butensäure und/oder 3-Methyl-Crotonsäure, vorzugsweise jedoch Sorbinsäure oder Ammoniumsorbat.

Nach einer bevorzugten Ausführungsform ist die ein- oder mehrfach ungesättigte Monocarbonsäure oder Monocarbonsäuren oder Alkalisalz der Monocarbonsäure oder eine Mischung derselben, vorzugsweise Ammoniumsalz dieser Monocarbonsäure(n), bis zu 60 Gew.-% (bezogen auf 100 Gew.-Teile der zur Oberflächenbehandlung eingesetzten Monocarbonsäuren), vorzugsweise bis zu 40 Gew.-%, durch eine neben den Carboxyl- oder Carboxylatgruppen eine polare Gruppen enthaltende gesättigte und/oder ungesättigte Monocarbonsäure, deren Alkalisalze, vorzugsweise Ammoniumsalz, mit C₂ - C₃₂ und/oder Huminsäure (oder Humussäure), deren Alkalisalz, vorzugsweise Ammoniumsalz, ersetzt.

Nach einer bevorzugten Ausführungsform enthält die Unterbodenschutzmasse 10 bis 60 Gew.-Teile, vorzugsweise 25 bis 45 Gew.-Teile, Vinylchloridhomo-, -co- oder -terpolymerisat, 10 bis 60 Gew.-Teile, vorzugsweise 20 bis 45 Gew.-Teile, eines Weichmachers oder Weichmachergemisches, 12 bis 1 Gew.-Teile, vorzugsweise 6 bis 2 Gew.-Teile, mindestens eines Farbstoffes oder Farbpigmentes, eines Additives und/oder Verarbeitungshilfs- oder Zusatzmittels, vorzugsweise Haftvermittlers und/oder Stabilisators, 10 bis 60 Gew.-Teile, vorzugsweise 15 bis 40 Gew.-Teile, mindestens eines Füllstoffes, vorzugsweise eines oberflächenbehandelten Calciumcarbonates oder eines oberflächenbehandelten, Calciumcarbonat enthaltendes Füllstoffgemisches oder besteht daraus, wobei das Calciumcarbonat oder das im Füllstoffgemisch enthaltene Calciumcarbonat mit 0,3 bis 12 Gew.-%, vorzugsweise 1 bis 5 Gew.-% (bezogen auf 100 Gewichtsteile des oberflächenbehandelten Calciumcarbonates oder des oberflächenbehandelten Füllstoffgemisches, vorzugsweise des darin enthaltenden Calciumcarbonates), mindestens einer ungesättigten Monocarbonsäure, Fettsäure, substituierten Fettsäure, einem Salz dieser Verbindung oder einem Fettsäurederivat, vorzugsweise einem Ammonium-, Alkalisalz oder gebildeten Calciumsalz einer ein- oder zweifach ungesättigten Monocarbonsäure mit C₄ bis C₁₄, vorzugsweise C₅ bis C₁₂, versehen ist, das oder die auf das auf der Oberfläche oder einem Teil der Oberfläche des Füllstoffes oder Füllstoffgemisches, vorzugsweise des Calciumcarbonates, angeordnet ist bzw. sind.

Für die erfindungsgemäße Unterbodenschutzmasse werden an sich bekannte verpastbare Vinylchloridhomo-, -co-, -ter- und/oder -pfropfpolymerisate oder verpastbare Mischungen von Polyvinylchlorid eingesetzt. Als verpastbare Vinylchloridhomo-, -co- oder -terpolymerisate können feinteilige Suspensions-, Emulsions- oder Pfropfpolymerisate, vorzugsweise jedoch Emulsionshomo-, -co- und/oder -terpolymerisate, eingesetzt werden. Als Vinylchloridco- oder -terpolymerisat werden an sich bekannte Vinylchloridco- oder -terpolymerisate mit mehr als 50 Gew.-%, vorzugsweise mehr als 80 Gew.-% Polyvinylchlorid- oder Vinylchloridanteil (bezogen auf 100 Gew.-Teile des Co- oder Terpolymerisates), vorzugsweise Vinylchlorid-Acrylat-, Vinylchlorid-Methacrylat-, Vinylchlorid-Vinylacetatcopolymerisate verwendet. Bevorzugt werden jedoch Copolymerisate mit einem Vinylchloridanteil über 90 Gew.-%, vorzugsweise über 95 Gew.-% eingesetzt. Die Herstellung der Unterbodenschutzmasse erfolgt unter Mitverwendung handelsüblicher Mischvorrichtungen oder Pastenmischer, z.B. Langsammischer (Kneter) oder Schnellmischer (Dissolver).

Als Weichmacher sind die an sich bekannten Weichmacher oder Weichmachermischungen geeignet, vorzugsweise Alkyl-, Aryl- oder Aralkylphthalate, vorzugsweise Alkylphthalate der Kettenlänge C₇ - C₁₁, Adipate, Sebacate.

Die Weichmacher können zu einem kleinen Anteil, z.B. bis zu 10, vorzugsweise 0 bis 5 Gew.-Teilen (bezogen auf Weichermachergewichtsanteile) durch die gleiche Menge eines organisch-chemischen Lösungsmittels ersetzt werden.

Als zusätzliche Füllstoffe des Füllstoffgemisches können neben Calciumcarbonat (synthetisches und/oder natürliches Calciumcarbonat) u.a. Dolomit, Talkum (einschließlich Mikro-talkum), Kieselsäure und/oder Quarzmehl eingesetzt werden.

Nach einer bevorzugten Ausführungsform enthält die Unterbodenschutzmasse zusätzlich ein Erdalkalihydroxid und/oder Erdalkalioxid, vorzugsweise Calciumoxid in sehr geringen Mengen.

Nach einer bevorzugten Ausführungsform ist in der Unterbodenschutzmasse ein synthetisches oberflächenbeschichtetes Calciumcarbonat enthalten, vorzugsweise hergestellt durch Einleiten von Kohlendioxid in eine Calciumhydroxidsuspension und durch nachfolgende Oberflächenbehandlung des hergestellten Calciumcarbonates mit einem Alkali- oder Ammoniumsalz einer ungesättigten Carbonsäure, Fettsäure oder substituierten Fettsäure. Dabei wird bei der Oberflächenbehandlung ganz oder teilweise die entsprechende Calciumverbindung dieser Fettsäuren auf der Oberfläche des Calciumcarbonates gebildet.

Die auf der Oberfläche des synthetischen Calciumcarbonates nach der Aufbringung des Behandlungsmittels gebildete Oberflächenschicht besteht bevorzugt aus einem Calcium- und/oder Alkalisalz, sowie ggf. Ammoniumsalz mindestens einer ungesättigten Fettsäure oder Monocarbonsäure mit C₅ bis C₁₂, vorzugsweise Sorbinsäure, oder enthält diese.

Die Erfindung betrifft weiterhin ein Verfahren zur Herstellung einer Unterbodenschutzmasse für Kraftfahrzeuge, wobei die Bestandteile, im wesentlichen enthaltend mindestens ein feinteiliges Vinylchloridhomo-, -co-, -ter- oder -pfropfpolymerisat, mindestens einen Weichmacher, mindestens einen Stabilisator, mindestens einen Füllstoff auf der Basis von Calciumcarbonat oder ein Calciumcarbonat enthaltendes Füllstoffgemisch und mindestens einen Haftvermittler und/oder einen anderen Hilfs- oder Zusatzstoff sowie ggf. einen Farbstoff, ein Farbpigment, ein Löse- und/oder Verdünnungsmittel, miteinander vermischt werden. Gemäß der Erfindung wird das Calciumcarbonat, vorzugsweise das synthetische Calciumcarbonat, vor der Zugabe zu der Unterbodenschutzmasse oder zu einem oder mehreren Bestandteile(n) der Unterbodenschutzmasse mit einer, mindestens ein Verdünnungs- oder Lösemittel enthaltenden Lösung, Emulsion oder Suspension eines Oberflächenbehandlungsmittels in Form einer ungesättigten Monocarbonsäure, Fettsäure, substituierten Fettsäure, einem Salz dieser Verbindungen mit C₄ bis C₁₄, vorzugsweise C₅ bis C₁₂ bei Temperaturen von 278 K bis 368 K, vorzugsweise 328 K bis 358 K, vermischt und behandelt. Nach der Einwirkung wird das Calciumcarbonat mit der auf der Oberfläche gebildeten Oberflächenschicht abfiltriert und behandelt, vorzugsweise getrocknet und gemahlen.

Nach einer bevorzugten Ausführungsform erfolgt der Zusatz der ungesättigten Monocarbonsäure, Fettsäure, Salze der Fettsäure und/oder substituierten Fettsäure zu einer wäßrigen Calciumcarbonatsuspension, die vorzugsweise synthetisch hergestellt worden ist (gefälltes Calciumcarbonat).

Das Oberflächenbehandlungsmittel wird nach einer bevorzugten Ausführungsform in Form einer wäßrigen Emulsion der wäßrigen Calciumcarbonatsuspension zugesetzt. Bei einer bevorzugten Ausführungsform werden die Oberflächenbehandlungsmittel in Form ihrer Salze, vorzugsweise Alkali- und/oder Ammoniumsalze, zur Oberflächenbehandlung dem Calciumcarbonat, vorzugsweise der Calciumcarbonatsuspension zugegeben.

Nach einer bevorzugten Ausführungsform wird das Oberflächenbehandlungsmittel in Form des Ammoniumsalzes eingesetzt. Das Ammoniumsalz des Oberflächenbehandlungsmittels reagiert ganz oder teilweise mit dem Calciumcarbonat auf der Oberfläche der Calciumcarbonatteilchen, so daß sich ganz oder teilweise die entsprechenden Calciumsalze des Oberflächenbehandlungsmittels auf der Oberfläche der Calciumcarbonatteilchen bilden und bei der Umsetzung die entstehenden Ammoniumverbindungen sich bei der Verfahrenstemperatur ganz oder teilweise verflüchtigen.

Die Erfindung betrifft weiterhin die Verwendung eines Calciumcarbonates oder Calciumcarbonat enthaltenden Füllstoffgemisches, das durch Behandlung mit einem Oberflächenbeschichtungsmittel auf der Basis einer ungesättigten Monocarbonsäure, Fettsäure, substituierten Fettsäure, einem Salz dieser Verbindung oder Fettsäurederivat mit C₄ bis C₁₄, vorzugsweise C₅ bis C₁₂, eine Oberflächenbeschichtung oder Oberflächenumwandlung, auf einem Teil oder der gesamten Oberfläche des Calciumcarbonates, bewirkt, so daß die Oberflächenbeschichtung aus Alkali- und/oder fettsauren Erdalkalisalzen oder -carboxylaten besteht oder diese enthält, zur Rheologiesteuerung von Unterbodenschutzmassen.

Unterbodenschutzmassen werden in der Regel im Spritzverfahren aufgetragen; die dabei verwendeten Pumpdrücke sind sehr hoch, da das Plastisol aus dem Vorratsbehälter in die Förderleitungen und dann durch die Düse des Spritzkopfes, letzteres geschieht mit hoher Geschwindigkeit, gedrückt werden muß. Wünschenswert sind daher hohe Strukturviskositäten, d. h. die Viskosität ist bei hohem Schergeschwindigkeitsgefälle niedrig. Nach dem Auftrag der Unterbodenschutzmasse auf das Blech soll sie von senkrechten Stellen nicht abfließen bzw. abtropfen, d. h. sie soll ein hohes Standvermögen haben, das u. a. durch die Messung der Rheologie und Bestimmung einer Fließgrenze beschrieben werden kann. Die Oberflächenbehandlung des Calciumcarbonates führt insofern zu einer bevorzugten Rheologie, als die Fließgrenze relativ zur Viskosität bei hohem Schergeschwindigkeitsgefälle stärker ansteigt, als z.B. bei nicht oberflächenbehandelten Calciumcarbonaten.

### Beispiele für die erfindungsgemäße Unterbodenschutzmasse

### Beispiel 1:

| | |
|---|---|
| Vinylchloridhomopolymerisat (Pastentype) Teile | 70 Gew.- |
| Polyvinylchlorid (Mikrosuspensionstype) Teile | 30 Gew.- |
| Diethylhexylphthalat Teile | 55 Gew.- |
| Diisononylphthalat Teile | 60 Gew.- |
| Calciumcarbonat, oberflächenbehandelt mit dem Ammoniumsalz der Sorbinsäure Teile | 70 Gew.- |
| Basisches Bleisulfat Teile | 2 Gew.- |
| Polyaminoamid Teile | 4 Gew.- |
| Calciumoxid Teile | 5 Gew.- |

### Beispiel 2:

| | |
|---|---|
| Vinylchloridhomopolymerisat (Pastentype) Teile | 30 Gew.- |
| Vinylchloridcopolymerisat Teile | 40 Gew.- |
| Polyvinylchlorid (Mikrosuspensionstype) Teile | 30 Gew.- |
| Diethylhexylphthalat Teile | 50 Gew.- |
| Diisononylphthalat Teile | 65 Gew.- |
| Calciumcarbonat, oberflächenbehandelt mit dem Ammoniumsalz der Sorbinsäure | 70 Gew.- |
| Teile | |
| Basisches Bleisulfat Teile | 2 Gew.- |
| Polyaminoamid Teile | 3 Gew.- |
| Calciumoxid Teile | 5 Gew.- |

Die Komponenten der Unterbodenschutzmassen der Beispiele 1 sowie 2 (jeweils getrennt) wurden vermischt und mittels Dissolver homogenisiert. Die entstandenen Unterbodenschutzmassen wurden zur Bestimmung der rheologischen Eigenschaften mittels eines Rotationsviskosimeters geprüft. Die Auswertung der Meßkurven ergaben eine deutlich erhöhte Fließgrenze, ausgewertet nach der Methode Bingham, bei einer relativ niedrigeren Viskosität bei hohem Schergeschwindigkeitsgefälle. Das bedeutet, daß die Unterbodenschutzmasse wegen der hohen Strukturviskosität (hohe Strukturviskosität bedeutet etwa niedrige Viskosität bei hohem Schergeschwindigkeitsgefälle) sich leichter fördern läßt, gleichzeitig aber nach dem Auftrag nicht fließt oder abtropft wegen der relativ höheren Fließgrenze. Dieses Eigenschaftsbild war mit anderen Füllstoffen modifiziert oder nicht, bislang nicht erzielbar.

Des weiteren wurden die Unterbodenschutzmassen hinsichtlich Standfestigkeit (Rinne nach DIN 52 454 - St - U 26 - 50) überprüft; nach allen Methoden wurde eine ausgezeichnete Standfestigkeit gefunden. Alle übrigen Anforderungen an eine Unterbodenschutzmasse wurden ebenso erfüllt (Gelierbedingungen, Haftung).

Herstellung des oberflächenbehandelten Calciumcarbonat:
Die Herstellung des erfindungsgemäß oberflächenbehandelten Calciumcarbonates erfolgte in der nachstehendend beschriebenen Weise:
Durch Einleiten von Kohlendioxid in eine wäßrige Suspension von 150 g Calciumhydroxid pro Liter wurde das Calciumcarbonat gefällt. Die Reaktionsendtemperatur betrug 70 °C. Die anschließende Oberflächenbehandlung erfolgt durch Zugabe einer ebenfalls auf 70 °C erwärmten wäßrigen Emulsion von Sorbinsäure, die als Ammoniumsalz vorlag. Die Zugabemenge wurde derart gewählt, daß eine Oberflächenbehandlungsmenge von 30 g/kg Calciumcarbonat resultierte. Nach intensivem Rühren wurde die Suspension filtriert, das erhaltene oberflächenbeschichtete Calciumcarbonat bei 105 °C getrocknet und nachfolgend gemahlen.

### Vergleichsbeispiel 3:

Zusammensetzung wie Beispiel 1. Das Calciumcarbonat war jedoch mit Fettsäure (techn.), nämlich Gemische von Stearin-, Palmitin- und Ölsäure (ST Edenor 20) oberflächenbehandelt.

Die ermittelten Fließgrenzen und Viskositäten für das Beispiel 1 und Vergleichsbeispiel 3 sind aus der Tabelle ersichtlich.

| Beisp. | Substanzen für die Oberflächenbehandlung in Form von | Fließgrenze(Pa) | Viscosität (Pa·s) |
|---|---|---|---|
| 1 | Ammoniumsorbat | 403 | 29,4 |
| 3 | Fettsäure (techn.) | 81 | 8,0 |

## Patentansprüche

1. Unterbodenschutzmasse für Kraftfahrzeuge, enthaltend mindestens ein feinteiliges Vinylchloridhomo-,-co-, -ter- oder pfropfpolymerisat, mindestens einen Weichmacher, mindestens einen Stabilisator, mindestens einen Füllstoff auf der Basis von Calciumcarbonat oder ein Calciumcarbonat enthaltendes Füllstoffgemisch und mindestens einen Haftvermittler und/oder einen anderen Hilfs- oder Zusatzstoff, sowie ggf. mindestens einen Farbstoff, ein Farbpigment, ein Löse- und/oder Verdünnungsmittel, dadurch gekennzeichnet, daß ein Teil oder der gesamte Füllstoff, vorzugsweise das Calciumcarbonat oder das Füllstoffgemisch, vorzugsweise das im Füllstoffgemisch enthaltene Calciumcarbonat, mit
0,3 bis 12 Gew.-%, vorzugsweise
1 bis 5 Gew.-%
(bezogen auf 100 Gewichtsteile des oberflächenbehandelten Calciumcarbonates oder des oberflächenbehandelten Füllstoffgemisches, vorzugsweise des darin enthaltenen Calciumcarbonates) einer ungesättigten Monocarbonsäure, Fettsäure, oder einem Salz dieser Verbindung mit
C₄ bis C₁₄, vorzugsweise
C₅ bis C₁₂
versehen ist, die bzw. das auf der Oberfläche oder einem Teil der Oberfläche des Füllstoffes oder Füllstoffgemisches, vorzugsweise des Calciumcarbonates, angeordnet ist.

2. Unterbodenschutzmasse nach Anspruch 1, dadurch gekennzeichnet, daß das Calciumcarbonat eine mittlere Teilchengröße von
0,01 µm bis 20 µm, vorzugsweise
0,05 µm bis 5 µm,
aufweist.

3. Unterbodenschutzmasse nach Ansprüchen 1 und 2, dadurch gekennzeichnet, daß das eingesetzte Calciumcarbonat eine spezifische Oberfläche (BET, Adsorption mit Stickstoff) von
0,5 bis 100 m²/g, vorzugsweise
1 bis 50 m²/g,
aufweist.

4. Unterbodenschutzmasse nach einem oder mehreren der Ansprüche 1 bis 3, dadurch gekennzeichnet, daß als ungesättigte Monocarbonsäure eine ein- oder mehrfach ungesättigte, vorzugsweise eine zweifach ungesättigte konjugierte oder nicht konjugierte Monocarbonsäure, ein Alkalisalz derselben, vorzugsweise ein Ammoniumsalz einer ein- oder zweifach ungesättigten Monocarbonsäure, oder eine Mischung derselben eingesetzt ist.

5. Unterbodenschutzmasse nach einem oder mehreren der Ansprüche 1 bis 4, dadurch gekennzeichnet, daß die ein- oder mehrfach ungesättigte Monocarbonsäure oder Alkalisalz der Monocarbonsäure oder eine Mischung derselben, vorzugsweise Ammoniumsalz dieser Monocarbonsäure(n), bis zu 60 Gew.-% (bezogen auf 100 Gew.-Teile der zur Oberflächenbehandlung eingesetzten Monocarbonsäuren), vorzugsweise bis zu 40 Gew.-%, durch eine neben den Carboxyl- oder Carboxylatgruppen eine polare Gruppen enthaltende gesättigte und/oder ungesättigte Monocarbonsäure, deren Alkalisalze, vorzugsweise Ammoniumsalz, mit C₂- C₃₂ und/oder Huminsäure (oder Humussäure), deren Alkalisalz, vorzugsweise Ammoniumsalz, ersetzt ist.

6. Unterbodenschutzmasse nach einem oder mehreren der Ansprüche 1 bis 5, dadurch gekennzeichnet, daß die Unterbodenschutzmasse
10 bis 60 Gew.-Teile, vorzugsweise
25 bis 45 Gew.-Teile,
Vinylchloridhomo-, -co- oder -terpolymerisat,
10 bis 60 Gew.-Teile, vorzugsweise
20 bis 45 Gew.-Teile,
eines Weichmachers oder Weichmachergemisches,
12 bis 1 Gew.-Teile, vorzugsweise
6 bis 2 Gew.-Teile,
mindestens eines Farbstoffes oder Farbpigmentes, eines Additives und/oder Verarbeitungshilfs- oder Zusatzmittels, vorzugsweise Haftvermittlers und/oder Stabilisators,
10 bis 60 Gew.-Teile, vorzugsweise
15 bis 40 Gew.-Teile,
mindestens eines Füllstoffes, vorzugsweise eines oberflächenbehandelten Calciumcarbonates oder eines oberflächenbehandelten, Calciumcarbonat enthaltenden Füllstoffgemisches, enthält oder daraus besteht, das mit
0,3 bis 12 Gew.-%, vorzugsweise
1 bis 5 Gew.-%
(bezogen auf 100 Gewichtsteile des oberflächenbehandelten Calciumcarbonates oder des oberflächenbehandelten Füllstoffgemisches, vorzugsweise des darin enthaltenden Calciumcarbonates), mindestens einer ungesättigten Monocarbonsäure, einem Salz dieser Verbindung, vorzugsweise mindestens einem Ammoniumsalz einer ein- oder zweifach ungesättigten Monocarbonsäure mit
C₄ bis C₁₄, vorzugsweise
C₅ bis C₁₂,
versehen ist, die auf der Oberfläche oder einem Teil der Oberfläche des Füllstoffes oder Füllstoffgemisches, vorzugsweise des Calciumcarbonates, angeordnet ist.

7. Unterbodenschutzmasse nach einem oder mehreren der Ansprüche 1 bis 6, dadurch gekennzeichnet, daß in der Unterbodenschutzmasse ein synthetisches oberflächenbeschichtetes Calciumcarbonat enthalten ist, vorzugsweise hergestellt durch Einleitung von Kohlendioxid in eine Calciumhydroxidsuspension und durch nachfolgende Oberflächenbehandlung des hergestellten Calciumcarbonates mit eine Alkali- oder Ammoniumsalz einer ungesättigten Monocarbonsäure.

8. Unterbodenschutzmasse nach einem oder mehreren der Ansprüche 1 bis 7, dadurch gekennzeichnet, daß die auf der Oberfläche des synthetischen Calciumcarbonates nach der Aufbringung des Behandlungsmittels gebildete Oberflächenschicht aus einem Calcium- und/oder Alkalisalz sowie ggf. Ammoniumsalz der Sorbinsäure besteht oder diese enthält.

9. Verfahren zur Herstellung einer Unterbodenschutzmasse für Kraftfahrzeuge, wobei die Bestandteile im wesentlichen enthaltend mindestens ein feinteiliges Vinylchloridhomo-, -co-, -ter- oder -pfropfpolymerisat, mindestens einen Weichmacher, mindestens einen Stabilisator, mindestens einen Füllstoff auf der Basis von Calciumcarbonat oder ein Calciumcarbonat enthaltendes Füllstoffgemisch und mindestens einen Haftvermittler und/oder einen anderen Hilfs- oder Zusatzstoff sowie ggf. einen Farbstoff, ein Farbpigment, ein Löse-und/oder Verdünnungsmittel, miteinander vermischt werden, dadurch gekennzeichnet, daß das Calciumcarbonat,vorzugsweise das synthetische Calciumcarbonat, vor der Zugabe zu der Unterbodenschutzmasse oder zu einem oder mehreren Bestandteile(n) der Unterbodenschutzmasse mit einer, mindestens ein Verdünnungs- oder Lösemittel enthaltenden Lösung, Emulsion oder Suspension eines Oberflächenbehandlungsmittels in Form einer ungesättigten Monocarbonsäure, einem Salz dieser Verbindungen, vorzugsweise Ammoniumsalz bei Temperaturen von
278 K bis 368 K, vorzugsweise
328 K bis 358 K,
vermischt und behandelt wird, daß nach der Einwirkung das Calciumcarbonat mit der auf der Oberfläche gebildeten Oberflächenschicht abfiltriert und behandelt, vorzugsweise getrocknet und gemahlen wird.

10. Verwendung eines Calciumcarbonates oder Calciumcarbonat enthaltenden Füllstoffgemisches, das durch Behandlung mit einem Oberflächenbeschichtungsmittel auf der Basis einer ungesättigten, Monocarbonsäure, einem Salz dieser Verbindung oder Fettsäurederivat, vorzugsweise mindestens einem Ammoniumsalz von der Monocarbonsäure mit
C₄ bis C₁₄, vorzugsweise
C₅ bis C₁₂,
eine Oberflächenbeschichtung oder Oberflächenumwandlung, auf einen Teil oder der gesamten Oberfläche des Calciumcarbonates bewirkt, so daß die Oberflächenbeschichtung aus Alkali- und/oder Erdalkalisalzen der ungesättigten Monocarbonsäure oder -carboxylaten besteht oder diese enthält, zur Rheologiesteuerung von Unterbodenschutzmassen.

## Claims

1. A material to protect the underside of the floor of motor vehicles, containing at least one fine-particulate vinyl chloride homo-, -co-, -ter- or graft polymeride, at least one softener, at least one stabillser, at least one filler based on calcium carbonate or a filler mixture containing calcium carbonate, and at least one adhesion agent and/or another auxiliary agent or adjuvant, and also, if necessary, at least one dye, a colour pigment, a solvent and/or thinning agent, characterised in that a part or the entire filler, preferably the calcium carbonate or the filler mixture, preferably the calcium carbonate contained in the filler mixture, is provided with
0.3 to 12 % by weight, preferably
1 to 5 % by weight
(in relation to 100 parts by weight of the surface-treated calcium carbonate or of the surface-treated filler mixture, preferably of the calcium carbonate contained therein) of an unsaturated monocarboxylic acid, fatty acid, or a salt of this compound with
C₄ to C₁₄, preferably
C₅ to C₁₂
which is arranged on the surface or on a part of the surface of the filler or of the filler mixture, preferably of the calcium carbonate.

2. A material to protect the underside of the floor according to Claim 1, characterised in that the calcium carbonate has a mean particle size of
0.01 µm to 20 µm, preferably
0.05 µm to 5 µm.

3. A material to protect the underside of the floor according to Claims 1 and 2, characterised in that the calcium carbonate which is used has a specific surface (BET, adsorption with nitrogen) of
0.5 to 100 m²/g, preferably
1 to 50 m²/g.

4. A material to protect the underside of the floor according to one or more of Claims 1 to 3, characterised in that as unsaturated monocarboxylic acid, a singly or multiply unsaturated monocarboxylic acid, preferably a doubly unsaturated conjugate or non-conjugate monocarboxylic acid, an alkali salt thereof, preferably an ammonium salt of a singly or doubly unsaturated monocarboxylic acid, or a mixture thereof, is used.

5. A material to protect the underside of the floor according to one or more of Claims 1 to 4, charcterised in that the singly or multiply unsaturated monocarboxylic acid or alkali salt of the monocarboxylic acid or a mixture thereof, preferably ammonium salt of this/these monocarboxylic acid(s), is substituted up to 60 % by weight (in relation to 100 parts by weight of the monocarboxylic acids used for the surface treatment), preferably up to 40% by weight, by a saturated and/or unsaturated monocarboxylic acid, containing polar groups in addition to the carboxyl-or carboxylate groups, the alkali salts thereof, preferably ammonium salt, with C₂- C₃₂ and/or humic acid (or humus acid), the alkali salt thereof, preferably ammonium salt.

6. A material to protect the underside of the floor according to one or more of Claims 1 to 5, characterised in that the material to protect the underside of the floor contains or consists of
10 to 60 parts by weight, preferably
25 to 45 parts by weight,
vinyl chloride homo-, -co- or -terpolymeride,
10 to 60 parts by weight, preferably
20 to 45 parts by weight
of a softener or softener mixture,
12 to 1 parts by weight, preferably
6 to 2 parts by weight
at least of a dye or colour pigment, an additive and/or processing auxiliary agent or adjuvant, preferably of an adhesion agent and/or stabiliser,
10 to 60 parts by weight, preferably
15 to 40 parts by weight
at least of a filler, preferably of a surface-treated calcium carbonate or of a surface-treated filler mixture containing calcium carbonate, which is provided with
0.3 to 12 % by weight, preferably
1 to 5 % by weight
(in relation to 100 parts by weight of the surface-treated calcium carbonate or of the surface-treated filler mixture, preferaby of the calcium carbonate contained therein), at least of an unsaturated monocarboxylic acid, a salt of this compound, preferaby at least an ammonium salt of a singly or doubly unsaturated monocarboxylic acid with
C₄ to C₁₄, preferably
C₅ to C₁₂
which is arranged on the surface or on a part of the surface of the filler or of the filler mixture, preferably of the calcium carbonate.

7. A material to protect the underside of the floor according to one or more of Claims 1 to 6, characterised in that in the material to protect the underside of the floor, a synthetic, surface-coated calcium carbonate is contained, preferably produced by the introduction of carbon dioxide into a calcium hydroxide syspension and by subsequent surface treatment of the produced calcium carbonate with an alkali- or ammonium salt of an unsaturated monocarboxylic acid.

8. A material to protect the underside of the floor according to one or more of Claims 1 to 7, characterised in that the surface layer formed on the surface of the synthetic calcium carbonate after the application of the treatment agent consists of, or contains, a calcium- and/or alkali salt and also, if necessary, ammonium salt of sorbic acid.

9. A method for the production of a material to protect the underside of the floor of motor vehicles, in which the components substantially containing at least one fine particulate vinyl choride homo-, -co-, -ter- or graft polymeride, at least one softener, at least one stabiliser, at least one filler based on calcium carbonate or a filler mixture containing calcium carbonate and at least one adhesion agent and/or a different auxiliary substance or adjuvant and also, if required, a dye, a colour pigment, a solvent and/or thinning agent, are mixed together, characterised in that the calcium carbonate, preferably the synthetic calcium carbonate, before the addition to the material to protect the undersideof the floor, or to one or more of the components of the material to protect the underside of the floor, is mixed and treated with a solution, emulsion or suspension, containing at least one thinning agent or solvent, of a surface treatment agent in the form of an unsaturated monocarboxylic acid, a salt of these compounds, preferably ammonium salt at temperatures of
278 K to 368 K, preferably
328 K to 358 K,
that after the reaction, the calcium carbonate with the surface layer formed on the surface, is filtered off and treated,preferably dried and ground.

10. The use of a calcium carbonate or filler mixture containing calcium carbonate, which through treatment with a surface coating agent based on an unsaturated monocarboxylic acid, with a salt of this compound or fatty acid derivative, preferably at least one ammonium salt of the monocarboxylic acid with
C₄ to C₁₄, preferably
C₅ to C₁₂,
a surface coating or surface transformation is brought about on a part or on the entire surface of the calcium carbonate, so that the surface coating consists of alkali- and/or alkaline earth salts of the unsaturated monocarboxylic acid or -carboxylates, or contains these, for the rheological control of materials to protect the underside of the floor.

## Revendications

1. Composition de protection de bas de caisse pour véhicules automobiles, contenant au moins un homopolymère, un copolymère, un terpolymère ou un polymère greffé de chlorure de vinyle finement divisé, au moins un plastifiant, au moins un stabilisant, au moins une matière de charge à base de carbonate de calcium ou un mélange de matières de charge contenant du carbonate de calcium et au moins un agent d'adhésion et/ou un autre adjuvant ou additif ainsi qu'éventuellement un colorant, un pigment coloré, un solvant et/ou un diluant, caractérisée en ce qu'une partie ou la totalité de la matière de charge, de préférence du carbonate de calcium ou du mélange de matières de charge, de préférence le carbonate de calcium contenu dans le mélange de matières de charge, est additionnée de 0,3 à 12% en poids, de préférence de 1 à 5 parties en poids (rapporté à 100 parties en poids du carbonate de calcium ayant subi un traitement de surface, ou du mélange de matières de charge ayant subi un traitement de surface, de préférence du carbonate de calcium contenu dans ce mélange) d'un acide monocarboxylique non saturé, d'un acide gras ou d'un sel de ce composé ayant de 4 à 14 atomes de carbone, de préférence de 5 à 12 atomes de carbone, qui est appliqué sur la surface ou sur une partie de la surface de la matière de charge ou du mélange de matières de charge, de préférence du carbonate de calcium.

2. Composition de protection de bas de caisse selon la revendication 1, caractérisée en ce que le carbonate de calcium présente une granulométrie moyenne de 0,01 µm à 20 µm, de préférence de 0,05 µm à 5 µm.

3. Composition de protection de bas de caisse selon les revendications 1 et 2, caractérisée en ce que le carbonate de calcium utilisé présente une surface spécifique (BET, adsorption d'azote), de 0,5 à 100 m²/g de préférence 1 à 50 m²/g.

4. Composition de protection de bas de caisse selon une ou plusieurs des revendications 1 à 3, caractérisée en ce que l'on utilise, comme acide monocarboxylique non saturé, un acide monocarboxylique conjugué ou non conjugué, à une ou plusieurs liaisons non saturée, de préférence à deux liaisons non saturées, un sel alcalin de cet acide, de préférence un sel ammonique d'un acide monocarboxylique à une ou deux liaisons non saturées ou un mélange de ceux-ci.

5. Composition de protection de bas de caisse selon une ou plusieurs des revendications 1 à 4, caractérisée en ce que l'acide monocarboxylique a une ou plusieurs liaisons non saturées ou le sel alcalin de l'acide monocarboxylique ou un mélange de ceux-ci, de préférence le sel ammonique de ce ou ces acide(s) monocarboxylique(s) est remplacé, jusqu'à concurrence de 60% en poids au maximum (rapporté à 100 parties en poids des acides monocarboxyliques utilisés pour le traitement de surface), de préférence 40% en poids au maximum, par un acide monocarboxylique saturé et/ou non saturé, ayant de 2 à 32 atomes de carbone, contenant, outre les groupes carboxyle ou carboxylate, un groupe polaire, par les sels alcalins de celui-ci, de préférence son sel ammonique, et/ou par un acide humique (ou acide ulmique), son sel alcalin, de préférence son sel ammonique.

6. Composition de protection de bas de caisse selon une ou plusieurs des revendications 1 à 5, caractérisée en ce que la composition de protection de bas de caisse comprend ou est constituée de 10 à 60 parties en poids, de préférence 25 à 45 parties en poids, d'homopolymère, de copolymère ou de terpolymère de chlorure de vinyle, 10 à 60 parties en poids, de préférence 20 à 45 parties en poids, d'un plastifiant ou d'un mélange de plastifiants, 12 à 1 parties en poids, de préférence 6 à 2 parties en poids, d'au moins un colorant ou pigment coloré d'un additif et/ou d'un adjuvant ou additif de mise en oeuvre, de préférence d'un agent d'adhésion et/ou d'un stabilisant, 10 à 60 parties en poids, de préférence de 15 à 40 parties en poids, au moins une matière de charge, de préférence un carbonate de calcium ayant subi un traitement de surface ou un mélange de matières de charge ayant subi un traitement de surface et contenant du carbonate de calcium, et en ce qu'elle comprend de 0,3 à 12% en poids, de préférence 1 à 5% en poids (rapporté à 100 parties en poids du carbonate de calcium ayant subi un traitement de surface ou du mélange de matières de charge ayant subi un traitement de surface, de préférence du carbonate de calcium contenu dans ce mélange) d'au moins un acide monocarboxylique non saturé, d'un sel de ce composé, de préférence d'au moins un sel ammonique d'un acide carboxylique à une ou deux liaisons non saturées ayant de 4 à 14 atomes de carbone, de préférence de 5 à 12 atomes de carbone, qui est appliqué sur la surface ou sur une partie de la surface de la matière de charge ou du mélange des matières de charge, de préférence du carbonate de calcium.

7. Composition de protection de bas de caisse selon une ou plusieurs des revendications 1 à 6, caractérisée en ce que la composition de protection de bas de caisse contient un carbonate de calcium synthétique portant un revêtement de surface, préparé de préférence par injection de dioxyde de carbone dans une suspension d'hydroxyde de calcium et traitement de surface ultérieur du carbonate de calcium ainsi préparé par un sel alcalin ou ammonique d'un acide monocarboxylique non saturé.

8. Composition de protection de bas de caisse, selon une ou plusieurs des revendications 1 à 7, caractérisée en ce que la couche formée à la surface du carbonate de calcium synthétique après l'application de l'agent de traitement, est constituée d'un sel calcique et/ou alcalin ou, éventuellement, d'un sel ammonique de l'acide sorbique ou contient celui-ci.

9. Procédé de préparation d'une composition de protection de bas de caisse pour véhicules automobiles, dans lequel les constituants, comportant essentiellement au moins un homopolymère, un copolymère, un terpolymère ou un polymère greffé de chlorure de vinyle, au moins un plastifiant, au moins un stabilisant, au moins une matière de charge à base de carbonate de calcium ou un mélange de matières de charge contenant du carbonate de calcium et au moins un agent d'adhésion et/ou un autre adjuvant ou additif ainsi qu'éventuellement un colorant, un pigment coloré, un dissolvant et/ou un diluant, sont mélangés les uns aux autres, caractérisé en ce qu'avant son addition à la composition de protection de bas de caisse ou à un ou plusieurs constituants de la composition de protection de bas de caisse, le carbonate de calcium, de préférence le carbonate de calcium synthétique, est mélangé et traité avec une solution, une émulsion ou une suspension d'un agent de traitement de surface sous forme d'un acide monocarboxylique non saturé, d'un sel de ces composés, de préférence du sel ammonique, à des températures de 278 K à 368 K, de préférence de 328 K à 358 K, ladite solution, émulsion ou suspension contenant au moins un diluant ou un solvant, et en ce qu'après la réaction, le carbonate de calcium avec la couche superficielle formée à sa surface, est séparé par filtration et est traité, de préférence séché et broyé.

10. Utilisation d'un carbonate de calcium ou d'un mélange de matières de charge contenant du carbonate de calcium, traité par un agent d'enduction de surface à base d'un acide monocarboxylique non saturé, d'un sel de ce composé ou d'un dérivé d'acide gras, de préférence d'au moins un sel ammonique d'un acide monocarboxylique ayant de 4 à 14 atomes de carbone, de préférence de 5 à 12 atomes de carbone, pour réaliser une enduction de surface ou une transformation de surface sur une partie ou sur la totalité de la surface du carbonate de calcium, de telle sorte que la couche d'enduction soit constituée de sels alcalins ou alcalino-terreux de l'acide monocarboxylique non saturé ou des carboxylates de cet acide ou contient ceux-ci, afin d'améliorer la rhéologie des compositions de protection de bas de caisse.
